# EUROPEAN PATENT APPLICATION

(11) **EP 4 748 720 A1**
(43) Date of publication of application: **27.05.2026**
(21) Application number: 24845944.8
(22) Date of filing: 19.07.2024
(51) Int. Cl.: B64F 1/228, B64F 1/222, B25J 11/00, B25J 5/00, B25J 13/08, B25J 13/00, B25J 19/02, G08G 5/00, B60L 53/00, E04H 6/12

(54) **URBAN AIR MOBILITY PARKING ROBOT AND PARKING OPERATION SYSTEM USING SAME**

(30) Priority: 21.07.2023 KR 20230095391; 13.12.2023 KR 20230180500; 11.03.2024 KR 20240033740
(71) Applicant: Hyundai Elevator Co., Ltd., Chungju-si, Chungcheongbuk-do 27329 (KR); Hyundai Move-X Co., Ltd., Seoul 03127 (KR)
(72) Inventor: LEE, Jae Hoon, Incheon 22008 (KR); JUNG, Jae Keun, Incheon 22762 (KR); LEE, Young Ho, Incheon 22766 (KR); SONG, Joon Hyun, Chungju-si Chungcheongbuk-do 27329 (KR)
(74) Representative: Baldus, Oliver
(86) International application number: PCT/KR2024/010437
(87) International publication number: WO 2025/023642

(57) **Abstract**

An urban air mobility (UAM) parking robot is disclosed. The UAM parking robot includes: a robot main body; a mobile base including drive wheels coupled to the robot main body and a wheel drive unit rotating the drive wheels; a loading unit including a holder member supporting a lower portion of a support of a UAM aircraft to raise, lower, and support the UAM aircraft and a loading unit actuator moving the holder member; and a controller including a sensor detecting the support of the UAM aircraft.

## Description

### [Technical Field]

The present invention relates to an urban air mobility (UAM) parking robot and a parking management system using the same.

### [Background Art]

In response to demand for reduction of exhaust gas emissions to address global warming, the global urban air mobility (UAM) market is rapidly expanding.

That is, a revolution in the transportation sector and development of new technologies are required to reduce emissions from ground transportation, which account for about 16% of global carbon dioxide emissions. Furthermore, to address severe ground traffic congestion exacerbated by urban growth and the resulting degradation of the urban environment, it is necessary to build an urban air traffic system and integrate the same with the existing ground transportation system.

A vertiport, which is a specialized airport for takeoff and landing of UAM aircraft, may include a takeoff and landing area and a hangar.

UAM aircraft need to be moved between the takeoff and landing area and the hangar for charging, maintenance, and the like.

While automated guided vehicles (AGVs) could be utilized for this task, the AGVs struggle to accurately load and safely move UAM aircraft that use skids, instead of wheeled landing gear, as a support mechanism.

### [Disclosure]

### [Technical Problem]

It is one aspect of the present invention to provide an urban air mobility (UAM) parking robot that can rapidly and safely transport UAM aircraft using a holder member and a support member.

It is another aspect of the present invention to provide a parking management system that can provide more efficient parking management based on vertiport operation information and charging management information.

### [Technical Solution]

In accordance with one aspect of the present invention, an urban air mobility (UAM) parking robot includes:

a robot main body; a mobile base including drive wheels coupled to the robot body and a wheel drive unit rotating the drive wheels; a loading unit including a holder member supporting a lower portion of a support of a UAM aircraft to raise, lower and support the UAM aircraft, and a loading unit actuator moving the holder member; and a controller including a sensor detecting the support of the UAM aircraft.

The mobile base may further include an auxiliary wheel coupled to the robot main body, wherein the auxiliary wheel may be coupled to the robot main body to change direction depending on a traveling direction of the robot main body.

The loading unit may further include a support member supporting an upper portion of the support of the UAM aircraft, and the support member may be moved by the loading unit actuator.

The support member may be withdrawn from the robot main body by operation of the loading unit actuator.

The holder member of the loading unit may be coupled to a pivot member, the pivot member may be coupled to the loading unit actuator, and the holder member may be withdrawn from the robot main body as the loading unit actuator rotates the pivot member.

The mobile base may further include: a mobile base body on which the drive wheels and the wheel drive unit are mounted; and a mobile base body actuator rotating the mobile base body.

The controller may further include a laser scanner sensor to detect obstacles and map a travel route.

The loading unit may include: a rack gear moving the holder member; and a rotating gear meshed with the rack gear and coupled to the loading unit actuator.

In accordance with another aspect of the present invention, a parking management system using an urban air mobility (UAM) parking robot includes: the UAM parking robot described above, the UAM parking robot including a wireless communication module; and a hangar management unit configured to set and manage a parking space for UAM aircraft transported by the UAM parking robot, wherein the UAM parking robot transmits and receives information to and from the hangar management unit through the wireless communication module.

The parking management system may further include: a flight management unit configured to manage a flight schedule of the UAM aircraft landing at or taking off from a vertiport; and a charging management unit configured to manage charging of the UAM aircraft parked in a hangar of the vertiport.

### [Advantageous Effects]

Embodiments of the present invention provide an urban air mobility (UAM) parking robot that can provide efficient and safe transport and parking of UAM aircraft.

Embodiments of the present invention provide a parking management system that can provide parking management, charging management, and flight management for UAM aircraft.

### [Description of Drawings]

FIG. 1 is a schematic block diagram illustrating a technical idea of a UAM parking robot and a parking management system using the same, according to one embodiment of the present invention.
FIG. 2 is a first schematic view of a UAM parking robot according to one embodiment of the present invention.
FIG. 3 is a second schematic view of the UAM parking robot according to one embodiment of the present invention.
FIG. 4 is a schematic view of a mobile base of the UAM parking robot of FIG. 3.
FIG. 5 is a first schematic view of a loading unit of the UAM parking robot of FIG. 3.
FIG. 6 is a second schematic view of a loading unit of the UAM parking robot of FIG. 3.
FIG. 7 is a schematic view illustrating a first operational mode of the UAM parking robot according to one embodiment of the present invention.
FIG. 8 is a schematic view illustrating a second operational mode of the UAM parking robot according to one embodiment of the present invention.
FIG. 9 is a schematic view illustrating a third operational mode of the UAM parking robot according to one embodiment of the present invention.
FIG. 10 is a schematic view of a loading unit of the UAM parking robot according to another embodiment of the present invention.

### [Best Mode]

Hereinafter, embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

A vertiport, which is a specialized airport for takeoff and landing of UAM aircraft, includes a takeoff area, a landing area, and a hangar.

Specifically, the vertiport may be constructed on the rooftop of a building.

In addition, the hangar of the vertiport may be configured as a multi-story structure, wherein the takeoff area and the landing area may be selectively situated on the rooftop of the building or on the rooftop of the hangar.

An urban air mobility (UAM) aircraft is moved between the landing area, the hangar, and the takeoff area.

To this end, an urban air mobility (UAM) aircraft may be moved between different floors of the hangar by a lift and may be moved about a specific floor of the hangar by a parking robot.

The vertiport may be provided with a plurality of lifts corresponding to the hangar. In addition, the vertiport may be provided with two lifts corresponding to different sizes of UAM aircraft.

The parking robot may selectively board one of the two lifts depending on the size of a UAM aircraft loaded thereon before transporting the UAM aircraft.

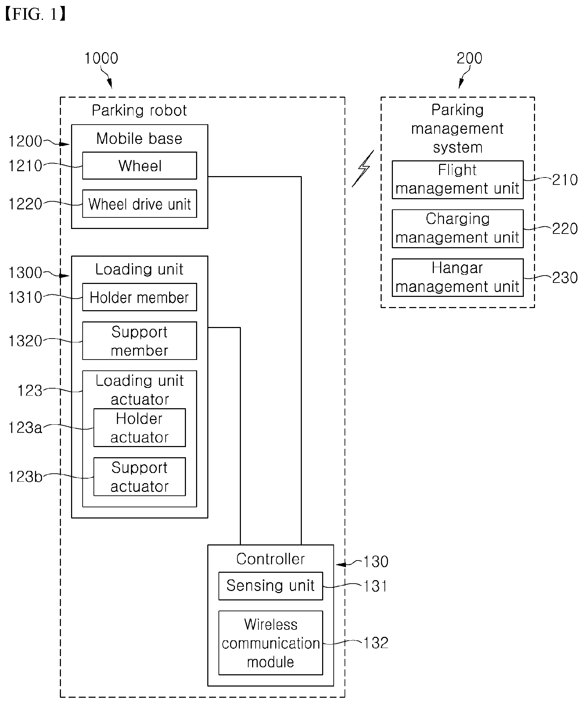

FIG. 1 is a schematic block diagram illustrating a technical idea of a UAM parking robot and a parking management system using the same, according to one embodiment of the present invention.

Referring to FIG. 1, the UAM parking robot 1000 enables more efficient parking management in association with the parking management system 200.

More specifically, the UAM parking robot 1000 includes a mobile base 1200, a loading unit 1300, and a controller 130.

The mobile base 1200 moves the parking robot.

The mobile base 1200 may include wheels 1210 and a wheel drive unit 1220.

The wheel drive unit 1220 drives the wheels 1210 and may include a motor.

The loading unit 1300 is configured to raise, lower, and support a UAM aircraft.

The loading unit 1300 may include a holder member 1310, a support member 1320, and a loading unit actuator 123.

The holder member 1310 holds a lower portion of a support of the UAM aircraft, and the support member 1320 supports an upper portion of the support of the UAM aircraft.

The loading unit actuator 123 moves the holder member 1310 and the support member 1320.

The loading unit actuator 123 may include a holder actuator 123a moving the holder member 1310 and a support actuator 123b moving the support member 1320.

The controller 130 controls operation of the mobile base 1200 and the loading unit 1300.

To this end, the controller 130 includes a sensing unit 131 and a wireless communication module 132.

The sensing unit 131 helps the loading unit 120 to efficiently load the support of the UAM aircraft thereon.

The sensing unit 131 may detect a location of the support of the UAM aircraft, a distance between components of the support of the UAM aircraft, and the like.

The support of the UAM aircraft may be of a skid type.

Here, the sensing unit 131 may detect a location of skids, a distance therebetween, and the shape thereof.

That is, the loading unit 1300 may operate the holder member 1310 and the support member 1320 using information acquired from the sensing unit 131.

In addition, the sensing unit 131 may further include a laser scanner sensor. The laser scanner sensor detects obstacles and maps a travel route.

The wireless communication module 132 provides information about the UAM parking robot 1000 to the parking management system 200.

The parking robot according to the present invention is applicable not only to UAM aircraft but also to various other types of air mobility vehicles.

The parking management system 200 may include a flight management unit 210, a charging management unit 220, and a hangar management unit 230.

The flight management unit 210 manages flight schedules of UAM aircraft landing at or taking off from a vertiport.

The charging management unit 220 manages charging of UAM aircraft parked in a hangar of the vertiport.

The hangar management unit 230 sets and manages parking spaces for UAM aircraft transported by the UAM parking robot 1000.

The UAM parking robot 1000 may transmit and receive information to and from the hangar management unit 230 through the wireless communication module.

The hangar management unit 230 may assign parking locations in the hangar based on flight information from the flight management unit 210 and charging schedules from the charging management unit 220.

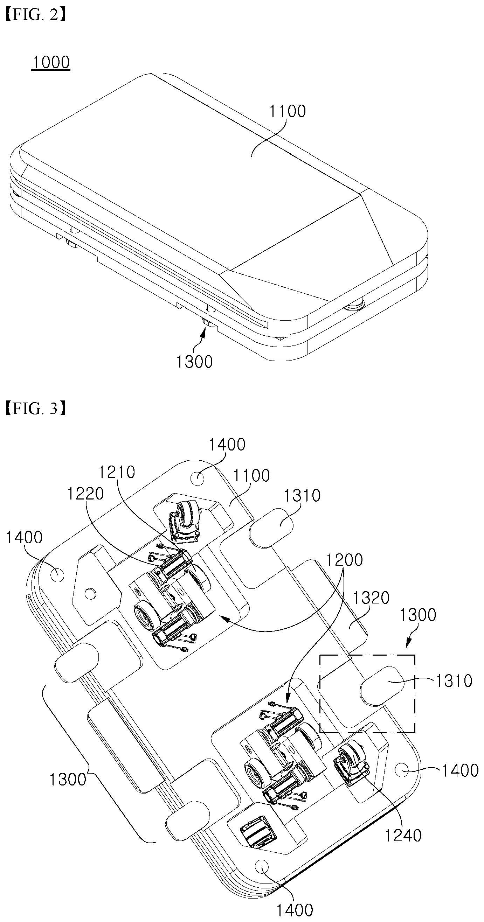

FIG. 2 is a first schematic view of a UAM parking robot according to one embodiment of the present invention, and FIG. 3 is a second schematic view of the UAM parking robot according to one embodiment of the present invention.

Referring to FIG. 2 and FIG. 3, the UAM parking robot 1000 includes a robot main body 1100, a mobile base 1200, a loading unit 1300, and a sensor 1400.

More specifically, the mobile base 1200 moves the parking robot and may include drive wheels 1210 and a wheel drive unit 1220.

The mobile base 1200 may further include an auxiliary wheel 1240.

The wheel drive unit 1220 rotates the drive wheels 1210.

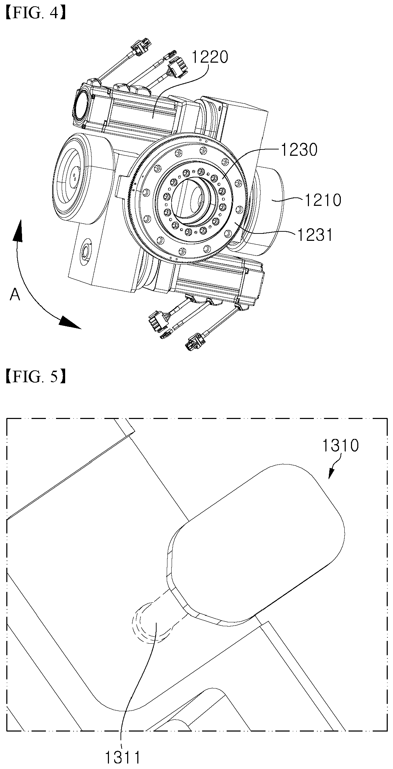

The drive wheels 1210 and the wheel drive unit 1220 may be mounted on a mobile base body 1230 (see FIG. 4).

The mobile base body 1230 is rotatably coupled to the robot main body 1100.

The auxiliary wheel 1240 bears the weight of a UAM aircraft loaded on the UAM parking robot 1000.

The auxiliary wheel 1240 may be coupled to the robot main body 1100 to change direction depending on a traveling direction of the robot main body 1100.

If a UAM aircraft is only supported by the drive wheels 1210, this can cause degradation in driving performance due to overload. Thus, using the auxiliary wheel 1240, the UAM parking robot 1000 can disperse the weight of the UAM aircraft, thereby achieving improved driving performance.

The loading unit 1300 is configured to raise, lower, and support a UAM aircraft.

The loading unit 1300 includes a holder member 1310, a support member 1320, and a loading unit actuator 123 (see FIG. 1).

The holder member 1310 raises or lowers a UAM aircraft in a stationary state.

The support member 1320 supports an upper portion of a support (for example, skids) of the UAM aircraft loaded on the holder member 1310.

That is, the loading unit 300 supports the upper portion of the skids with the support member 1320 while raising a lower portion of the skids with the holder member 1310, thereby ensuring stable holding, support, and movement of the UAM aircraft.

To this end, the holder member 1310 may be disposed both sides of a lower portion of the robot main body 1100, and the support member 1320 may be disposed both sides of an upper portion of the robot main body 1100. The loading unit actuator 123 moves the holder member 1310 and the support member 1320 for operation of the loading unit 1300.

That is, when the loading unit is not in operation, the holder member 1310 and the support member 1320 may be retracted into the robot main body 1100 and, when the loading unit is in operation, the holder member 1310 and the support member 1320 may be withdrawn from the robot main body 1100 to load a UAM aircraft thereon. As described above, the loading unit actuator 123 may include a holder actuator 123a (see FIG. 1) configured to move the holder member 1310 and a support actuator 123b (see FIG. 1) configured to move the support member 1320.

In addition, the holder actuator 123a may rotate and raise/lower the holder member 1310, while the support actuator 123b may allow the support member 1320 to protrude.

A distance between the holder member 1310 and the support member 1320 may be set to be greater than a thickness of the skid of a UAM aircraft.

Here, the UAM parking robot may further include an actuator, such as a hydraulic motor, to ensure more effective loading and support of UAM aircraft.

The sensor 1400 may include a laser scanner sensor to detect obstacles and map a travel route.

Next, the detailed technical features, structure, and operational mechanism of the UAM parking robot according to the present invention will be described in more detail with reference to FIG. 4 to FIG. 6.

FIG. 4 is a schematic view of the mobile base of the UAM parking robot of FIG. 3.

More specifically, the drive wheels 1210 and the wheel drive unit 1220 of the mobile base 1200 may be mounted on the mobile base body 1230.

The mobile base body 1230 may be rotatably mounted on the robot main body 1100.

The mobile base 1200 may further include a mobile base body actuator (not shown).

The mobile base body actuator selectively rotates the mobile base body 1230 by a desired angle (indicated by arrow A).

To this end, the mobile base body 1230 is formed with a gear 1231, and the mobile base body actuator may include a stepper motor (not shown). The stepper motor is meshed with the gear 1231 to rotate the mobile base body 1230.

In addition, the mobile base body 1230, on which the drive wheels 1210 and the wheel drive unit 1220 are mounted, may include a plurality of mobile base bodies 1230 mounted on the robot main body 1100.

FIG. 3 shows an embodiment in which two mobile base bodies 1230 are mounted on the front and rear of the robot main body 1100, respectively.

Accordingly, the UAM parking robot can move in a desired direction with a minimum turning radius.

FIG. 5 is a first schematic view of the loading unit of the UAM parking robot of FIG. 3.

Referring to FIG. 5, the holder member 1310 of the loading unit may be rotatably coupled to the robot main body 1100.

To this end, the holder member 1310 is coupled to a pivot member 1311 coupled to the holder actuator 123a.

When the loading unit is not in operation, the holder member 1310 may be retracted into the robot main body 1100 and, when the holder actuator 123a is operated, the holder member 1310 may be withdrawn from the robot main body 1100 in conjunction with rotation of the pivot member 1311.

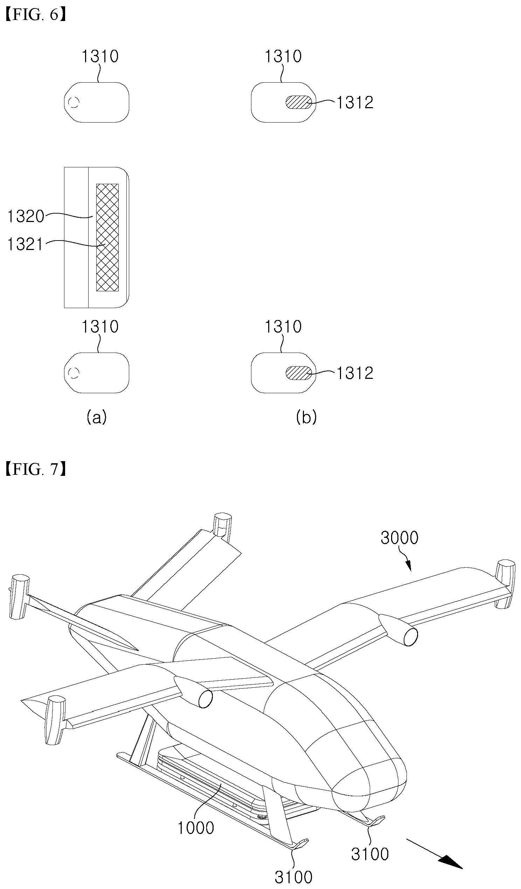

The holder member 1310 may be formed with a ramp corresponding to the skids 3100 (see FIG. 7) of the UAM aircraft such that the UAM aircraft is raised as the holder member 1310 is rotated.

FIG. 6 is a second schematic view of the loading unit of the UAM parking robot of FIG. 3.

Specifically, FIG. 6(a) is a schematic view of the holder member, and FIG. 6(b) is a schematic rear view of the holder member of FIG. 6(a).

Referring to FIG. 6, the holder member 1310 of the loading unit may be formed with a first anti-sliding portion 1312 providing frictional force.

The support member 1320 may also be formed with a second anti-sliding portion 1321 providing frictional force.

The first anti-sliding portion 1312 and the second anti-sliding portion 1321 may include an anti-sliding pad, wherein the anti-sliding pad may be formed of any suitable material that can provide frictional force.

The first anti-sliding portion 1312 is formed on an upper surface of the holder member 1310, and the second anti-sliding portion 1321 may be formed on a lower surface of the support member 1320.

Accordingly, when the loading unit is in operation, the first anti-sliding portion 1312 and the second anti-sliding portion 1321 may be disposed at opposite sides with respect to the support of the UAM aircraft.

The support of the UAM aircraft can be more stably and firmly supported by the first anti-sliding portion 1312 and the second anti-sliding portion 1321.

FIG. 7 is a schematic view illustrating a first operational mode of the UAM parking robot according to one embodiment of the present invention.

Referring to FIG. 7, to move a UAM aircraft 3000 in a stationary state, the UAM parking robot 1000 moves into a space between components of a support of the UAM aircraft.

When the support is implemented by a pair of skids 3100, the UAM parking robot 1000 moves into a space between the pair of skids 3100.

Here, the sensing unit 131 (see FIG. 1) of the UAM parking robot 1000 identifies a position of the UAM aircraft 3000 and a distance between the pair of skids 3100.

The mobile base 1200 of the UAM parking robot 1000 moves the UAM parking robot 1000 into the space between the pair of skids 3100 using real-time information acquired through the sensing unit 131.

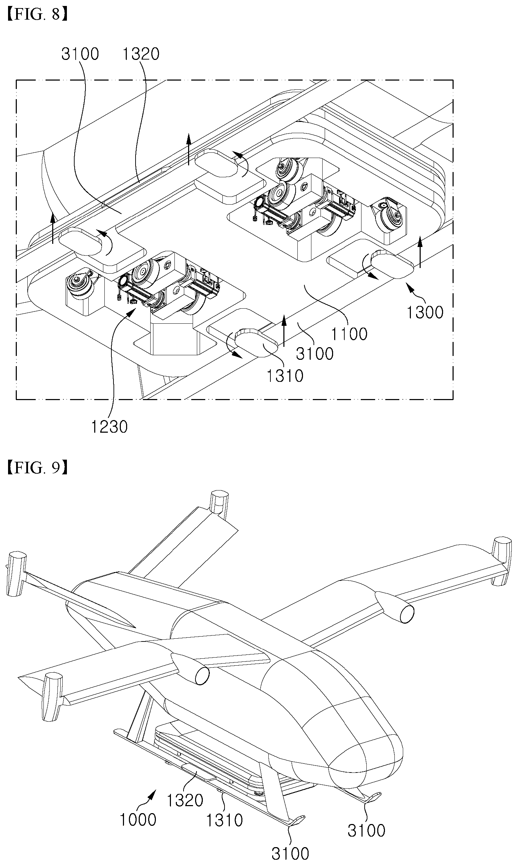

FIG. 8 is a schematic view illustrating a second operational mode of the UAM parking robot according to one embodiment of the present invention.

More specifically, FIG. 8 shows a state in which the loading unit 1300 is operated after the UAM parking robot 1000 has moved into the space between the pair of skids 3100, as shown in FIG. 7.

Referring to FIG. 8, the holder member 1310 is rotated by the holder actuator 123a to support the lower portion of a corresponding skid 3100.

Here, to facilitate support of the skid 3100 by the holder member 1310, a groove (not shown) corresponding to a movement range of the holder member 1310 may be formed in the ground where the skid 3100 is placed.

In addition, the support member 1320 is moved forwards by operation of the loading unit actuator to support the upper portion of a corresponding skid 3100.

The support member 1320 may be withdrawn from the robot main body by operation of the loading unit actuator.

Accordingly, with the lower portion of the skid 3100 held and raised by the holder member 1310, the upper portion of the skid 3100 is supported by the support member 1320, thereby allowing the skid 3100 to be clamped on the loading unit 1300.

The loading unit 1300 may further include a pressure sensor (not shown).

When the pressure sensor detects that the holder member 1310 has reached a maximum elevation point thereof, the holder drive unit may stop raising the holder member 1310.

FIG. 9 is a schematic view illustrating a third operational mode of the UAM parking robot according to one embodiment of the present invention.

More specifically, FIG. 9 shows a state in which the mobile base is operated to move the UAM aircraft 3000 after the UAM aircraft 3000 is loaded on the UAM parking robot 1000.

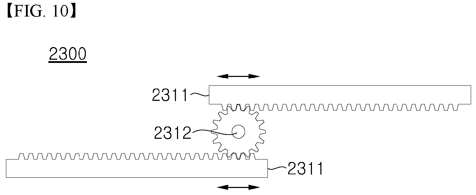

FIG. 10 is a schematic view of a loading unit of the UAM parking robot according to another embodiment of the present invention.

Referring to FIG. 10 the loading unit 2300 includes a plurality of rack gears 2311 and a rotating gear 2312 configured to move a holder member.

The plurality of rack gears 2311 may be meshed with the rotating gear 2312 in a symmetrical arrangement with respect to the rotating gear 2312.

The rotating gear 2312 may be coupled to a loading unit actuator.

A plurality of holder members may be coupled to the rack gears 2311, respectively, and the loading unit actuator rotates the rotating gear 2312 to move the holder members.

The holder member may be withdrawn from the robot main body by a distance corresponding to a withdrawal length of the rack gear 2311.

Accordingly, even when the distance between components of the support (that is, skids) of the UAM aircraft is large, the loading unit can efficiently load the UAM aircraft thereon.

Although FIG. 10 shows an embodiment in which two rack gears 2311 are moved by one loading unit actuator and one rotating gear 2312, it should be understood that the present invention is not limited thereto and the loading unit may have a structure in which rack gears are coupled in one-to-one correspondence to rotating gears.

While the preferred embodiments of the present invention have been described with reference to the drawings as above, it should be understood that the foregoing embodiments are provided for illustration only and are not to be in any way construed as limiting the present invention, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, and the like are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. An urban air mobility (UAM) parking robot comprising:
a robot main body;
a mobile base comprising drive wheels coupled to the robot body and a wheel drive unit rotating the drive wheels;
a loading unit comprising a holder member supporting a lower portion of a support of a UAM aircraft to raise, lower and support the UAM aircraft, and a loading unit actuator moving the holder member; and
a controller comprising a sensor detecting the support of the UAM aircraft.

2. The UAM parking robot according to claim 1, wherein
the mobile base further comprises an auxiliary wheel coupled to the robot main body, the auxiliary wheel being coupled to the robot main body to change direction depending on a traveling direction of the robot main body.

3. The UAM parking robot according to claim 1, wherein
the loading unit further comprises a support member supporting an upper portion of the support of the UAM aircraft, and
the support member is moved by the loading unit actuator.

4. The UAM parking robot according to claim 3, wherein the support member is withdrawn from the robot main body by operation of the loading unit actuator.

5. The UAM parking robot according to claim 1, wherein
the holder member of the loading unit is coupled to a pivot member, the pivot member being coupled to the loading unit actuator, and
the holder member is withdrawn from the robot main body as the loading unit actuator rotates the pivot member.

6. The UAM parking robot according to claim 1, wherein the mobile base further comprises: a mobile base body on which the drive wheels and the wheel drive unit are mounted; and a mobile base body actuator rotating the mobile base body.

7. The UAM parking robot according to claim 1, wherein the controller further comprises a laser scanner sensor to detect obstacles and map a travel route.

8. The UAM parking robot according to claim 1, wherein the loading unit comprises a rack gear moving the holder member and a rotating gear meshed with the rack gear and coupled to the loading unit actuator.

9. A parking management system using an urban air mobility (UAM) parking robot, comprising:
the UAM parking robot according to any one of claims 1 to 8, the UAM parking robot comprising a wireless communication module; and
a hangar management unit configured to set and manage a parking space for UAM aircraft transported by the UAM parking robot,
wherein the UAM parking robot transmits and receives information to and from the hangar management unit through the wireless communication module.

10. The parking management system according to claim 9, further comprising:
a flight management unit configured to manage a flight schedule of the UAM aircraft landing at or taking off from a vertiport; and
a charging management unit configured to manage charging of the UAM aircraft parked in a hangar of the vertiport.
